# EUROPÄISCHE PATENTSCHRIFT

(11) **EP 1 287 517 B1**
(45) Veröffentlichungstag und Bekanntmachung des Hinweises auf die Patenterteilung: **18.03.2009**
(21) Anmeldenummer: 01962697.7
(22) Anmeldetag: 01.06.2001
(51) Int. Cl.: G09F 27/00

(54) **OBJEKTBEZOGENE STEUERUNG VON INFORMATIONS- UND WERBETRÄGERN**
OBJECT-ORIENTED CONTROL OF INFORMATION AND ADVERTISEMENT SUPPORTS
COMMANDE ORIENTEE OBJET DE SUPPORTS D'INFORMATIONS ET PUBLICITAIRES

(30) Priorität: 02.06.2000 DE 10027365
(43) Veröffentlichungstag der Anmeldung: 05.03.2003
(73) Patentinhaber: Viisage Technology Aktiengesellschaft, 44801 Bochum (DE)
(72) Erfinder: WERNER, Martin, 58675 Hemer (DE); RINNE, Michael, 44357 Dortmund (DE); GEHLEN, Stefan, 44869 Bochum (DE)
(74) Vertreter: Grünecker, Kinkeldey, Stockmair & Schwanhäusser Anwaltssozietät
(86) Internationale Anmeldenummer: PCT/EP2001/006256
(87) Internationale Veröffentlichungsnummer: WO 2001/093230

(56) Entgegenhaltungen:
- WO-A-99/03050
- WO-A-99/40558
- DE-A- 19 523 518

## Beschreibung

### Gebiet der Erfindung

Die Erfindung betrifft eine Vorrichtung zur objektbezogenen Steuerung von Informationsanzeigevorrichtungen (z. B Werbeträgern). Insbesondere betrifft die Erfindung eine Vorrichtung zur objektbezogenen Steuerung von Informationsanzeigevorrichtungen mit wenigstens einer Sensoreinrichtung zum Detektieren eines Objekts oder einer Gruppe von Objekten und einer Steuereinrichtung. Außerdem betrifft die Erfindung ein System, das eine Informationsanzeigevorrichtung zusammen mit derartigen Vorrichtungen zur objektbezogenen Steuerung von Informationsanzeigevorrichtungen aufweist.

Die Informationen können verschiedenster Art sein. Gängige Beispiele sind Auskünfte, Hinweise, Hilfen, insbesondere auch Werbung und Mischformen dieser vorgenannten Arten von Information. Als Objekte werden insbesondere Personen, aber auch Gegenstände wie Fahrzeuge angesehen.

### Stand der Technik

Vorrichtungen zur Steuerung von Informationsanzeigevorrichtungen sind aus dem Stand der Technik bekannt.

Die automatische Steuerung kann sich auf einfache Auslösemechanismen beschränken, die in Abhängigkeit von dem Vorhandensein oder der Bewegung von Objekten gespeicherte Informationen wiedergeben. Eine bekannte technische Ausführung eines solchen Auslösemechanismus ist ein Bewegungsmelder.

Die WO 99/40558 offenbart eine Reklameanlage mit einer Vorrichtung zum Speichern von Werbebotschaften und eine Informationsverbreitungsvorrichtung. Weiter umfasst die Vorrichtung eine Ermittlungsvorrichtung zum Ermitteln eines aktuellen werbespezifischen Situationsparameters sowie eine Steuervorrichtung, um in Abhängigkeit des ermittelten Situationsparameters eine der gespeicherten Werbebotschaften auszuwählen und über die Informationsverbreitungsvorrichtung zu verbreiten. Die Reklameanlage ermöglicht eine Verbreitung von Werbebotschaften, die spezifisch auf Personen zugeschnitten sind.

Demnach liegt der Erfindung die Aufgabe zugrunde, eine Vorrichtung zur objektbezogenen Steuerung wenigstens einer Informationsanzeigevorrichtung bereit zu stellen, die eine individuelle und automatische Anpassung der wiedergegebenen Information ermöglicht.

### Beschreibung der Erfindung

Diese Aufgabe wird durch eine Vorrichtung gemäß Anspruch 1 gelöst.

Die Steuereinrichtung ist so ausgelegt, dass sie zur personenbezogenen Steuerung der wenigstens einen Informationsanzeigevorrichtung vorgesehen ist und das wenigstens eine Klassifikationsmerkmal der detektierten Person oder Gruppe von Personen mit Hilfe eines biometrischen Verfahrens ermittelt wird, da sich solche Verfahren hervorragend zum Feststellen von personenbezogenen Klassifikationsmerkmalen eignen.

Das biometrische Verfahren umfasst ein Verfahren zur Gesichtserkennung, da hierdurch in der Regel mehr und/oder spezifischere Klassifikationsmerkmale als mit anderen Verfahren ermittelbar sind.

Die Gesichtserkennung ermöglicht eine Beurteilung, ob eine Person eine ihr auf einer Informationsanzeigevorrichtung dargebotene Information betrachtet oder nicht betrachtet. Abhängig davon kann die Informationsanzeigevorrichtung gesteuert werden. So kann eine Person z. B. durch Blinksignale, etc. auf die Informationsanzeigevorrichtung aufmerksam gemacht werden.

Gemäß einer bevorzugten Weiterbildung der Erfindung umfasst die wenigstens eine Sensoreinrichtung wenigstens eine Videokamera zur Aufzeichnung von Videobildern und ist die Steuereinrichtung so ausgelegt, dass sie das wenigstens eine Klassifikationsmerkmal aus aufgezeichneten Videobildern des detektierten Objekts oder der Gruppe von Objekten ermittelt. Dies hat den Vorteil, dass durch die Ausweitung der Detektion auf den visuellen Bereich ein breiteres Spektrum an Klassifikationsmerkmalen zur Verfügung steht, was eine bessere individuelle Anpassung der anzuzeigenden Information ermöglicht.

Um ein zuverlässigeres Ermitteln von Klassifikationsmerkmalen zu ermöglichen, ist die Steuereinrichtung vorteilhaft so ausgelegt, dass sie das wenigstens eine Klassifikationsmerkmal über eine Mittelung über mehrere aufgezeichnete Videobilder des detektierten Objekts oder der Gruppe von Objekten ermittelt.

Dies ist vor allem dann von besonderem Vorteil, wenn es sich bei den Objekten bewegte Objekte oder Personen handelt. Diese können in einzelnen Videobildern unter einem ungünstigen Blickwinkel aufgenommen sein, so dass die Auswertung von mehreren Videobildern überhaupt erst die Ermittlung bestimmter Klassifikationsmerkmale ermöglicht.

Bei der wiedergegebenen Information kann es sich um Information handeln, die der betreffenden Person präsentiert wird, z. B. um individuell angepasste Orientierungshilfen oder Werbung, aber auch um die Person betreffende Information, die z. B. einem Dienstleistungspersonal verfügbar gemacht wird.

Hierzu sind viele Einsatzgebiete denkbar, unter anderem: Flughäfen, Bahnhöfe, Öffentliche Ämter, Bürogebäude, Krankenhäuser, Industriegelände, sicherheitsrelevante Anlagen, etc.

Bei Personen können die Klassifikationsmerkmale vorzugsweise das Geschlecht und/oder das Alter und/oder die Körpergröße und/oder das Körpergewicht und/oder die Hautfarbe und/oder die Haarfarbe und/oder die Art der Kleidung und/oder die ethnische Zugehörigkeit und/oder die Posen von Personen, umfassen. Somit lässt sich eine bestmögliche Anpassung der anzuzeigenden Information an Einzelpersonen, aber auch an Gruppen von mehreren Personen erreichen.

Allgemein können visuelle Auswerteverfahren eingesetzt werden, die separat oder in Kombination Objekteigenschaften wie Farbe, Textur, projizierte Formen, oder dreidimensionale Formen, etc. zur Bestimmung von Klassifikationsmerkmalen auswerten.

In einer besonders bevorzugten Weiterbildung der Vorrichtung führt die Steuereinrichtung eine statistische Auswertung der ermittelten Klassifikationsmerkmale des detektierten Objekts oder der Gruppe von Objekten zur Ermittlung statistischer Daten durch.

In Fällen, bei denen Personengruppen detektiert wurden, umfasst diese statistische Auswertung besonders zweckmäßig eine Mittelung über die jeweilige Gruppe.

In einer vorteilhaften Ausführungsform wählt die Steuereinrichtung die anzuzeigende Information anhand der ermittelten statistischen Daten aus.

Gemäß einer anderen Weiterbildung der zuvor beschriebenen Vorrichtungen speichert die Steuereinrichtung die statistischen Daten und macht sie einer externen Auswertungseinrichtung, beispielsweise zur Ermittlung der Werbewirksamkeit der anzeigbaren Information, zugänglich. Dies erlaubt eine optimale Anpassung der angezeigten Information an Einzelpersonen oder Personengruppen.

In einer weiteren vorteilhaften Ausführungsform umfassen die oben beschriebenen Vorrichtungen ferner eine mit der Steuereinrichtung über eine Datenleitung verbundene Eingabeeinrichtung (falls erwünscht, kann die Eingabeeinrichtung natürlich auch in die Steuereinrichtung integriert sein). In diese Eingabeeinrichtung ist eine personen- oder objektbezogene Information eingebbar (bei bestimmten Anwendungsbereichen auch durch die betreffende Person selbst), wobei die Steuereinrichtung diese eingegebene Information mit dem wenigstens einen durch die wenigstens eine Sensoreinrichtung für die bestimmte Person oder einem zugehörigen Objekt (z. B. ihrem Kfz) ermittelten Klassifikationsmerkmal korreliert.

Diese Information kann manuell, z. B. in Form einer PIN, eingebbar sein, oder automatisch auslesbar in Form eines auf einer Identifikationskarte vorgesehenen Codes. Falls eine wie oben beschriebene Erkennungsmarke vorgesehen ist, können die Erkennungsmarke und die Identifikationskarte vorteilhaft als Einheit ausgebildet sein.

Wegen der besagten Korrelation der eingegebenen personenbezogenen Information mit dem wenigstens einen ermittelten Klassifikationsmerkmal kann nach einmaliger (aktiver) Eingabe der personenbezogenen Information eine Identifizierung anhand der korrelierten Klassifikationsmerkmale durchgeführt werden.

So kann z. B. die Identifikationskarte eine Sitzplatzkarte für einen Zug sein, dessen Inhaber nach einmaligen Auslesen (z. B. bei der Ausstellung der Sitzplatzkarte oder des Fahrscheins) ohne sein weiteres aktives Eingreifen durch die an den Informationsanzeigevorrichtungen wiedergegebene Information zu seinem Sitzplatz geführt wird.

Ähnlich kann z. B. in einem Parkleitsystem nach dem Ausstellen eine Parkscheins (oder nach der Eingabe einer PIN durch den Fahrer) für ein Auto der Fahrer des Autos durch ein Parkhaus zu seinem Parkplatz geleitet werden. Wenn ferner die objektbezogene Vorrichtung eine Korrelation zwischen dem Fahrer und seinem Wagen herstellt, so kann der zu Fuß zu seinem Wagen zurückkehrende Fahrer zu diesem zurückgeleitet werden.

Die oben genannte Aufgabe wird ferner gelöst durch ein System, dass wenigstens eine Informationsanzeigevorrichtung und eine der zuvor beschriebenen Vorrichtungen zur objektbezogenen Steuerung der wenigstens einen Informationsanzeigevorrichtung umfasst.

Vorzugsweise sind dabei die Informationsanzeigevorrichtungen durch die Steuervorrichtung separat ansteuerbar, so dass gleichzeitig unterschiedliche Informationen angezeigt werden können.

Wenn die Steuereinrichtung und die wenigstens eine Informationsanzeigevorrichtung räumlich voneinander getrennt sind, so werden sie zweckmäßigerweise über Datenleitungen zur Datenübertragung miteinander verbunden, wobei diese Datenleitungen bevorzugt das Internet umfassen.

Vorteilhaft kann eine externe Auswerteeinrichtung vorgesehen sein, die über eine Datenleitung zur Datenübertragung mit der Steuereinrichtung verbunden ist und die, z. B. aufgrund größerer Rechenkapazität und/oder Zugriffsmöglichkeiten auf verschiedene Datenbanken, weitergehende Auswertungen der ermittelten Daten zulässt.

Besonders vorteilhaft ist es, wenn alle oder wenigstens ein Teil der Datenleitungen das Internet umfassen, da dies die Bereitstellung von Datenleitungen bzw. den Aufbau eines eigenständigen Netzwerks zur Datenübertragung ganz oder teilweise erübrigt.

Weiterhin können eine Mehrzahl der zuvor beschriebenen Anzeigeeinrichtungen eingesetzt werden, auf denen eine zeitliche Abfolge von Information dargestellt ist. Insbesondere kann hierbei die zeitliche Abfolge durch das Klassifikationsmerkmal bzw. Identifikationsmerkmal gesteuert werden.

Im Folgenden wird die Erfindung unter Bezugnahme auf die beigefügten Zeichnungen im Detail beschrieben.

In den Zeichnungen zeigen:
- Fig. 1:: schematisch eine erste Ausführungsform der vorliegenden Erfindung zur Verwendung einer personenbezogenen Steuerung einer Informationsanzei- gevorrichtung; und
- Fig. 2:: schematisch eine zweite Ausführungsform der vorliegenden Erfindung zur Verwendung in einem Parkhausleitsystem.

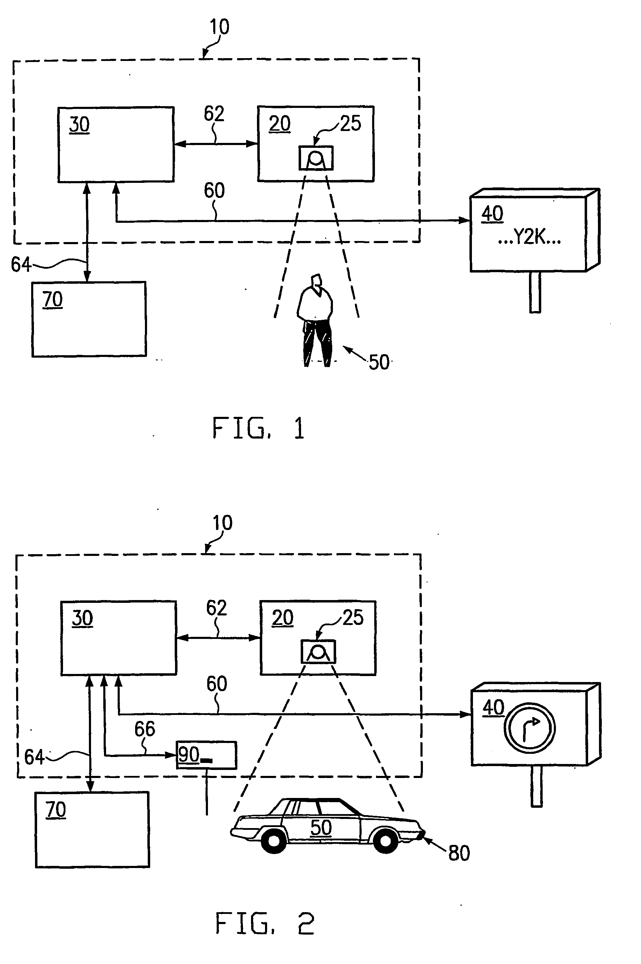

In Figur 1 ist eine beispielhafte Ausführungsform des vorliegenden erfindungsgemäßen Systems dargestellt, bei der eine erfindungsgemäße Vorrichtung (10) zur personenbezogenen Steuerung wenigstens einer Informationsanzeigevorrichtung (40) und eine Informationsanzeigevorrichtung (40) über eine Datenleitung (60) miteinander verbunden sind.

Eine Sensoreinrichtung (20), die hier eine Videokamera (25) umfasst, detektiert eine Person (50) und sendet entsprechende Daten, z. B. Videobilder, an die Steuereinrichtung (30). Die Steuereinrichtung wertet die erhaltenen Daten aus und ermittelt Klassifikationsmerkmale der detektierten Person (50).

Bei einer personenbezogenen Steuerung können solche Klassifikationsmerkmale das Geschlecht und/oder das Alter und/oder die Körpergröße und/oder das Körpergewicht und/oder die Hautfarbe und/oder die Haarfarbe und/oder die Art der Kleidung und/oder die ethnische Zugehörigkeit von Personen sein.

Zur Ermittlung der Klassifikationsmerkmale können verschiedene Auswerteverfahren eingesetzt werden.

Geeignete Verfahren sind insbesondere visuelle Auswerteverfahren, die z.B. anhand von einzelnen oder mehreren aufgezeichneten Videobildern durchgeführt werden können. Die oben genannten Klassifikationsmerkmale lassen sich dadurch mit sehr hoher Zuverlässigkeit ermitteln.

Besonders hervorzuheben sind in diesem Zusammenhang biometrische Auswerteverfahren, und unter diesen wiederum speziell Methoden der Gesichtserkennung.

Durch Ermittlung solcher Klassifikationsmerkmale kann die durch die Informationsanzeigeeinrichtung (40) wiedergegebene Information an einzelne Personen oder Gruppen von Personen spezifisch angepasst werden.

Für eine solche Anpassung ist es vorteilhaft, wenn die Steuereinrichtung (30) eine statistische Auswertung der ermittelten Klassifikationsmerkmale durchführt, z. B. zur Ermittlung von repräsentativen Durchschnittsgrößen. Dies ist insbesondere für die Wiedergabe von Werbung von Bedeutung.

Entsprechend einer nicht dargestellten Ausführungsform, die eine besonders zuverlässige Identifizierung ermöglicht, können Objekte oder Personen mit durch die Sensoreinrichtung (20) detektierbaren Erkennungsmarken ausgestattet sein.

Falls erwünscht oder erforderlich, kann dadurch auch eine vollständige Identifizierung von Personen und anschließende Steuerung der Informationsanzeigevorrichtung durchführbar sein. Eine solche kann z.B. auf Flughäfen, Bahnhöfen, Industriegeländen, sicherheitsrelevante Anlagen, und in Öffentlichen Ämtern, Bürogebäuden, Krankenhäusern, etc. von Vorteil sein und den betreffenden Personen selbst und/oder dem zuständigen Dienstleistungspersonal von Nutzen sein.

Eine weitere Anpassung der Informationswiedergabe kann dadurch erreicht werden, dass die von der Steuereinrichtung (30) ermittelten Klassifikationsmerkmale zusammen mit den Videobildern an eine externe Auswerteeinrichtung (70) übermittelt werden, die umfangreichere und subtilere Auswerteverfahren durchführen kann. Beispielsweise kann hierdurch ermittelt werden, wie lange bestimmte Personen ihren Blick auf die Informationsanzeigevorrichtung (40) richten.

Dies kann unter anderem dazu verwendet werden, um eine optimale Werbewirksamkeit der wiederzugebenden Information zu gewährleisten.

In Figur 2 ist eine beispielhafte weitere Ausführungsform des vorliegenden erfindungsgemäßen Systems zur Verwendung als Parkleitsystem dargestellt.

Im abgebildeten Beispiel führt ein Autofahrer an der Einfahrt zu einem Parkhaus eine Karte (Identifikationskarte, Scheckkarte, Parkschein, etc) in eine Eingabeeinrichtung (90) oder gibt manuell einen Code (z.B. PIN Code) ein. Gleichzeitig wird er und/oder das Auto durch die Sensoreinrichtung (20) detektiert, und die durch die Eingabeeinrichtung (90) und die Sensoreinrichtung (20) ermittelten Daten werden über Datenleitungen (62, 66) an die Steuereinrichtung (30) weitergegeben und miteinander korreliert. Bei der Weiterfahrt kann das Auto über weitere Sensoreinrichtungen (20) kann der Fahrer und/oder das Auto (50) detektiert und durch die Steuereinrichtung identifiziert werden und durch Ausgabe von Orientierungsinformation an geeignet angebrachten Informationsanzeigevorrichtungen schließlich zu seinem Parkplatz geleitet werden.

Von besonderem Vorteil ist ferner, wenn personenbezogene (Fahrer) und objektbezogene (Auto) Daten miteinander korreliert werden. So kann z. B. auch ein sein Auto suchender Fahrer zu diesem zurückgeleitet werden.
Im vorliegenden Fall kann das Kfz-Kennzeichen eines Fahrzeugs als Erkennungsmarke (80) dienen. Alternativ können aber an den Objekten auch speziell für das System eingerichtete Erkennungsmarken (80) vorgesehen sein.

Vorteilhaft können die von der Steuereinrichtung (30) ermittelten Klassifikationsmerkmale an eine externe Auswerteeinrichtung (70) übermittelt werden, die umfangreichere Auswerteverfahren durchführen kann, z. B. eine automatische Abbuchung von Parkgebühren in Abhängigkeit von der Parkdauer.

## Patentansprüche

1. Eine Vorrichtung (10) zur objektbezogenen Steuerung wenigstens einer Informationsanzeigevorrichtung (40) mit
wenigstens einer Sensoreinrichtung (20) zum Detektieren eines Objekts (50) oder einer Gruppe von Objekten; und
einer Steuereinrichtung (30);
die Steuereinrichtung (30) zur Ermittlung wenigstens eines Klassifikationsmerkmals wenigstens eines durch die wenigstens eine Sensoreinrichtung (20) detektierten Objekts (50) oder der Gruppe von Objekten und zur Steuerung der wenigstens einen Informationsanzeigevorrichtung (40) auf Basis des wenigstens einen ermittelten Klassifikationsmerkmals ausgelegt ist,
die zur personenbezogenen Steuerung der wenigstens einen Informationsanzeigevorrichtung vorgesehen ist und in welcher die Steuereinrichtung (30) so ausgelegt ist, dass sie das wenigstens eine Klassifikationsmerkmal der detektierten Person (50) oder Gruppe von Personen mit Hilfe eines biometrischen Verfahrens ermittelt, und
wobei das biometrische Verfahren ein Verfahren zur Gesichtserkennung umfasst.

2. Vorrichtung nach Anspruch 1, in welcher die wenigstens eine Sensoreinrichtung (20) wenigstens eine Videokamera (25) zur Aufzeichnung von Videobildern umfasst und die Steuereinrichtung (30) so ausgelegt ist, dass sie das wenigstens eine Klassifikationsmerkmal aus aufgezeichneten Videobildern des detektierten Objekts (50) oder der Gruppe von Objekten ermittelt.

3. Vorrichtung nach Anspruch 2, in welcher die Steuereinrichtung (30) so ausgelegt ist, dass sie das wenigstens eine Klassifikationsmerkmal über eine Mittelung über mehrere aufgezeichnete Videobilder des detektierten Objekts (50) oder der Gruppe von Objekten ermittelt.

4. Vorrichtung nach einem der vorangegangenen Ansprüche, in welcher die wenigstens eine Sensoreinrichtung (20) an dem Objekt (50) oder den Objekten vorgesehene Erkennungsmarken (80) detektieren kann und diese für die Steuereinrichtung (30) zur Ermittlung des wenigstens einen Klassifikationsmerkmals verwendbar sind.

5. Vorrichtung nach einem der vorangegangenen Ansprüche, in welcher das wenigstens eine Klassifikationsmerkmal das Geschlecht und/oder das Alter und/oder die Körpergröße und/oder das Körpergewicht und/oder die Hautfarbe und/oder die Haarfarbe und/oder die Art der Kleidung und/oder die ethnische Zugehörigkeit und/oder die Pose der detektierten Person (50) oder Gruppe von Personen umfassen.

6. Vorrichtung nach einem der vorangegangenen Ansprüche, in welcher das wenigstens eine Klassifikationsmerkmal Objekteigenschaften wie Farbe, Textur, projizierte Formen, oder dreidimensionale Formen, etc. umfasst.

7. Vorrichtung nach einem der vorangegangenen Ansprüche, in welcher die Steuereinrichtung (30) eine statistische Auswertung der ermittelten Klassifikationsmerkmale des detektierten Objekts (50) oder Gruppe von Objekten zur Ermittlung statistischer Daten durchführt.

8. Vorrichtung nach Anspruch 7, in welcher die statistische Auswertung eine Mittelung über eine Gruppe von Objekten umfasst.

9. Vorrichtung nach Anspruch 7 oder 8, in welcher die Steuereinrichtung (30) die anzuzeigende Information anhand der ermittelten statistischen Daten auswählt.

10. Vorrichtung nach einem der Ansprüche 7 bis 9, in weicher die Steuereinrichtung (30) die ermittelten statistischen Daten speichert und einer externen Auswerteeinrichtung (70) zugänglich macht.

11. Vorrichtung nach einem der vorangegangenen Ansprüche, mit wenigstens einer mit der Steuereinrichtung (30) über eine Datenleitung (66) verbundenen Eingabeeinrichtung (90), in die Information eingebbar ist, wobei die Steuereinrichtung (30) die eingegebene Information mit dem wenigstens einen durch die wenigstens eine Sensoreinrichtung (20) ermittelten Identifikationsmerkmal korreliert.

12. System mit
wenigstens einer Informationsanzeigevorrichtung (40); und
einer Vorrichtung (10) zur objektbezogenen Steuerung der wenigstens einen Informationsanzeigevorrichtung (40) nach einem der Ansprüche 1 bis 11.

13. System nach Anspruch 12 mit mehreren Informationsanzeigevorrichtungen (40), die durch die Steuereinrichtung (30) zur Anzeige unterschiedlicher Information separat ansteuerbar sind.

14. System nach Anspruch 12 oder 13, in welcher die wenigstens eine Sensoreinrichtung (20) und/oder die wenigstens eine Informationsanzeigevorrichtung (40) räumlich getrennt von der Steuereinrichtung (10) und über Datenleitungen (60, 62) zur Datenübertragung mit dieser verbunden sind.

15. System nach einem der Ansprüche 12 bis 14, mit einer externen Auswerteeinrichtung (70), die mit der Steuereinrichtung (30) über eine Datenleitung (64) zur Datenübertragung verbunden ist.

16. System nach Anspruch 14 oder 15, wobei wenigstens eine der Datenleitungen (60, 62, 64, 66) zur Datenübertragung das Internet umfasst.

## Claims

1. A device (10) for the object-oriented control of at least one information display device (40), comprising
at least one sensor device (20) for detecting an object (50) or a group of objects; and
a control means (30);
the control means (30) is configured for determining at least one classification feature of an object (50) or of the group of objects detected by the at least one sensor device (20) and for controlling the at least one information display device (40) on the basis of the at least one determined classification feature,
which is provided for person-oriented control of the at least one information display device and in which the control means (30) is configured for determining the at least one classification feature of the detected person (50) or group of persons with the aid of a biometric method, and
wherein the biometric method comprises a face recognition method.

2. A device according to claim 1, wherein the at least one sensor device (20) comprises at least one video camera (25) for recording video images and the control means (30) is configured for determining the at least one classification feature from recorded video images of the detected object (50) or group of objects.

3. A device according to claim 2, wherein the control means (30) is configured for determining the at least one classification feature by averaging a plurality of recorded video images of the detected object (50) or group of objects.

4. A device according to one of the preceding claims, wherein the at least one sensor device (20) is able to detect identification marks (80) provided on the object (50) or the objects, and wherein these identification marks are adapted to be used for the control means (30) for determining the at least one classification feature.

5. A device according to one of the preceding claims, wherein the at least one classification feature comprises the sex and/or age and/or height and/or weight and/or color of the skin and/or hair color and/or nature of dress and/or the ethnic affiliation and/or the pose of the detected person (50) or group of persons.

6. A device according to one of the preceding claims, wherein the at least one classification feature comprises object features, such as color, texture, projected shapes, or three-dimensional shapes, etc.

7. A device according to one of the preceding claims, wherein the control means (30) executes a statistical evaluation of the determined classification features of the detected object (50) or group of objects for determining statistical data.

8. A device according to claim 7, wherein the statistical evaluation comprises averaging over a group of objects.

9. A device according to claim 7 or 8, wherein the control means (30) selects the information to be displayed on the basis of the determined statistical data.

10. A device according to one of the claims 7 to 9, wherein the control means (30) stores the determined statistical data and makes them available to an external evaluation means (70).

11. A device according to one of the preceding claims, comprising at least one input device (90) which is connected to the control means (30) via a data line (66) and into which information can be entered, said control means (30) correlating the entered information with the at least one identification feature determined by the at least one sensor device (20).

12. A system comprising
at least one information display device (40); and
a device (10) for object-oriented control of the at least one information display device (40) according to one of the claims 1 to 11.

13. A system according to claim 12 comprising a plurality of information display devices (40) which are adapted to be controlled separately by the control means (30) for displaying different items of information.

14. A system according to claim 12 or 13, wherein the at least one sensor device (20) and/or the at least one information display device (40) are spatially separated from the control means (30) and are connected to said control means (30) via data lines (60, 62) for data transmission.

15. A system according to one of the claims 12 to 14, comprising an external evaluation means (70) which is connected to the control means (30) via a data line (64) for data transmission.

16. A system according to claim 14 or 15, wherein at least one of the data lines (60, 62, 64, 66) for data transmission comprises the internet.

## Revendications

1. Dispositif (10) pour commander en fonction d'objets au moins un dispositif d'affichage d'informations (40), avec
au moins un dispositif capteur (20) pour détecter un objet (50) ou un groupe d'objets ; et
un dispositif de commande (30) ;
le dispositif de commande (30) étant conçu pour déterminer au moins une caractéristique de classification d'au moins un objet (50) détecté par le ou les dispositifs capteurs (20) ou du groupe d'objets, et pour commander le ou les dispositifs d'affichage d'informations (40) sur la base de la ou des caractéristiques de classification déterminées,
qui est prévu pour commander en fonction de personnes le ou les dispositifs d'affichage d'informations et dans lequel le dispositif de commande (30) est conçu pour déterminer à l'aide d'un procédé biométrique la ou les caractéristiques de classification de la personne (50) détectée ou du groupe de personnes détecté, et
le procédé biométrique comprenant un procédé de reconnaissance du visage.

2. Dispositif selon la revendication 1, dans lequel le ou les dispositifs capteurs (20) comprennent au moins une caméra vidéo (25) pour enregistrer des images vidéo, et le dispositif de commande (30) est conçu pour déterminer la ou les caractéristiques de classification à partir d'images vidéo enregistrées de l'objet détecté (50) ou du groupe d'objets.

3. Dispositif selon la revendication 2, dans lequel le dispositif de commande (30) est conçu pour déterminer la ou les caractéristiques de classification par l'intermédiaire d'une moyenne établie sur plusieurs images vidéo enregistrées de l'objet (50) détecté ou du groupe d'objets.

4. Dispositif selon l'une des revendications précédentes, dans lequel le ou les dispositifs capteurs (20) peuvent détecter des plaques d'identité (80) prévues sur l'objet (50) ou sur les objets, et ces plaques d'identité sont utilisables pour le dispositif de commande (30) en vue de déterminer la ou les caractéristiques de classification.

5. Dispositif selon l'une des revendications précédentes, dans lequel la ou les caractéristiques de classification comprennent le sexe et/ou l'âge et/ou la taille et/ou le poids et/ou la couleur de peau et/ou la couleur de cheveux et/ou le type de vêtement et/ou l'appartenance ethnique et/ou la pose de la personne (50) détectée ou du groupe de personnes détecté.

6. Dispositif selon l'une des revendications précédentes, dans lequel la ou les caractéristiques de classification comprennent des propriétés d'objet telles que la couleur, la texture, les formes projetées ou des formes en trois dimensions, etc.

7. Dispositif selon l'une des revendications précédentes, dans lequel le dispositif de commande (30) effectue une analyse statistique des caractéristiques de classification déterminées de l'objet (50) détecté ou du groupe d'objets détecté, pour obtenir des données statistiques.

8. Dispositif selon la revendication 7, dans lequel l'analyse statistique comprend l'établissement d'une moyenne sur un groupe d'objets.

9. Dispositif selon la revendication 7 ou 8, dans lequel le dispositif de commande (30) sélectionne les informations à afficher à l'aide des données statistiques obtenues.

10. Dispositif selon l'une des revendications 7 à 9, dans lequel le dispositif de commande (30) met en mémoire les données statistiques obtenues et les rend accessibles à un dispositif d'analyse extérieur (70).

11. Dispositif selon l'une des revendications précédentes, avec au moins un dispositif d'entrée (90) qui est relié au dispositif de commande (30) par une ligne de données (66) et dans lequel des informations peuvent être entrées, le dispositif de commande (30) établissant une corrélation entre les informations entrées et la ou les caractéristiques d'identification obtenues par le ou les dispositifs capteurs (20).

12. Système avec
au moins un dispositif d'affichage d'informations (40) ; et
un dispositif (10) pour commander en fonction d'objets le ou les dispositifs d'affichage d'informations (40) selon l'une des revendications 1 à 11.

13. Système selon la revendication 12, avec plusieurs dispositifs d'affichage d'informations (40) qui sont aptes à être commandés séparément par le dispositif de commande (30) afin d'afficher différentes informations.

14. Système selon la revendication 12 ou 13, dans lequel le ou les dispositifs capteurs (20) et/ou le ou les dispositifs d'affichage d'informations (40) sont séparés, dans l'espace, du dispositif de commande (10) et sont reliés à celui-ci par des lignes de données (60, 62) pour une transmission de données.

15. Système selon l'une des revendications 12 à 14, avec un dispositif d'analyse extérieur (70) qui est relié au dispositif de commande (30) par une ligne de données (64) pour une transmission de données.

16. Système selon la revendication 14 ou 15, l'une au moins des lignes de données (60, 62, 64, 66) pour la transmission de données comprenant l'Internet.
